# EUROPÄISCHE PATENTANMELDUNG

(11) **EP 0 829 947 A1**
(43) Veröffentlichungstag der Anmeldung: **18.03.1998**
(21) Anmeldenummer: 97810637.5
(22) Anmeldetag: 05.09.1997
(51) Int. Cl.: H02K 15/00, H02K 15/09, B23K 9/32, B08B 15/04

(54) **Entfernen von Bearbeitungrückständen bei der Herstellung von Kollektorankern**

(30) Priorität: 11.09.1996 CG 221896
(71) Anmelder: Zihlmann Wickeltechnik AG, 5436 Würenlos (CH)
(72) Erfinder: Bolli, Thomas, 5313 Klingnau (CH)
(74) Vertreter: Patentanwälte Breiter + Wiedmer AG

(57) **Zusammenfassung**

Das Verfahren dient dem Entfernen von festen, flüssigen und/oder gasförmigen Bearbeitungsrückständen (62, 64, 72) bei der Herstellung von Kollektorankern (10). Die Bearbeitungsrückstände (62,64,72) werden durch Erzeugung eines wenigstens temporären, lokalen Unterdrucks am Arbeitsort (A) mit dem angesaugten Luftstrom (60) abtransportiert und einem Behälter oder einer Reinigungs- und Recyclinganlage zugeführt. Der lokale Unterdruck wird vorzugsweise an der Ansaugseite einer als Luftmengenverstärker ausgebildeten Ansaugdüse (28) erzeugt. Das Verfahren wird insbesondere zum Entfernen von Drahtresten (62) von Wickelautomaten, Drehspänen (64) von Drehautomaten oder Dämpfen (72) von Schweissautomaten angewendet.

## Beschreibung

Die Erfindung bezieht sich auf ein Verfahren zum Entfernen von festen, flüssigen und/oder gasförmigen Bearbeitungsrückständen bei der Herstellung von Kollektorankern. Weiter betrifft die Erfindung eine Anwendung des Verfahrens.

Kollektoranker, auch Läufer genannt, werden in elektrischen Motoren und Stromgeneratoren eingesetzt. In industriellen Herstellungsverfahren werden insbesondere Wickelautomaten zum Wickeln der Kupferdrähte, Drehautomaten zum Ueberdrehen der Kollektorflächen und Schweissautomaten eingesetzt. Bei allen auch in automatischem Betrieb eingesetzten Maschinen fallen Bearbeitungsrückstände an, beispielsweise bei Wickelautomaten Drahtresten, bei Drehautomaten Späne und bei Schweissautomaten von verbrannten Lackisolationen gebildete Dämpfe. Die Bearbeitungsrückstände können u.a. zu Betriebsstörungen, Unordnung am Arbeitsort und einer Beeinträchtigung der Arbeitshygiene am Arbeitsplatz führen. Es ist bekannt, Drahtresten von Wickelautomaten mit Druckluft wegzublasen. Damit können wohl Betriebsstörungen grösstenteils vermieden werden, die weggeblasenen Drahtresten sind jedoch verhältnismässig schwierig zu sammeln. Auch wirbelt die Druckluft Staubpartikel, Flüssigkeitsresten und dgl. in unerwünscht hohem Masse auf. Weiter ist es gängige Praxis, bei Schweissautomaten grossformatige Absaughauben anzuordnen, welche entstehende Dämpfe entfernen. Insgesamt vermögen die bekannten Massnahmen nicht zu zufriedenstellenden Ergebnissen zu führen.

Der Erfindung liegt die Aufgabe zugrunde, ein Verfahren der eingangs genannten Art zu schaffen, mit welchem die Bearbeitungsrückstände einfach, wirtschaftlich und ökologisch sinnvoll entsorgt werden können. Weiter soll das Verfahren auf allen Stufen der Herstellung von Kollektorankern angewendet werden können.

Bezüglich des Verfahrens wird die Aufgabe erfindungsgemäss dadurch gelöst, dass die Bearbeitungsrückstände durch Erzeugung eines wenigstens temporären, lokalen Unterdrucks am Arbeitsort mit dem angesaugten Luftstrom abtransportiert werden. Spezielle und weiterbildende Ausführungsformen sind Gegenstand von abhängigen Ansprüchen.

Mit dem Arbeitsort wird der Bereich bezeichnet, von welchem aus die Bearbeitungsrückstände abgesaugt werden. Entsprechend wird die Zeitdauer mit lokalem Unterdruck als Arbeitsphase bezeichnet.

Während einer Arbeitsphase ist eine Saugöffnung einer Ansaugdüse direkt am Arbeitsort positioniert. Die Saugöffnung hat eine verhältnismässig grosse lichte Weite, wodurch ein entsprechend grosser, auf die Bearbeitungsrückstände einwirkender Luftstrom entsteht.

Vorzugsweise umfasst die Ansaugdüse im Bereich der Saugöffnung einen im wesentlichen haubenförmigen Adapter, welcher in der Arbeitsphase den Arbeitsort teilweise umschliesst und so zum verbesserten Abtransport der Bearbeitungsrückstände beiträgt. Dieser Adapter ist benutzerspezifisch für eine oder mehrere Maschinen individuell konzipiert. Er kann besser positioniert werden, wenn seitliche Aussparungen zur Aufnahme von Maschinenteilen vorgesehen sind.

Die abtransportierten Bearbeitungsrückstände können einer Anlage zum Reinigen und/oder Recyclieren zugeführt werden. Die Dämpfe und Gase werden in der Regel durch eine Reinigungs- bzw. Waschanlage geführt und anschliessend in die Atmosphäre abgelassen. Metallische Drahtresten und Späne können gereinigt, gesammelt und eingeschmolzen werden.

Zur Erzeugung des erforderlichen Unterdrucks können alle konventionellen Mittel eingesetzt werden, beispielsweise eine Vakuumpumpe mit einem Ansaugschlauch. Als besonders vorteilhaft haben sich Injektordüsen mit Druckluftzufuhr erwiesen. Die Druckluft wird mit einem Druck von beispielsweise 1 bis 10 bar durch einen Anschluss in eine Ringkammer gespeist, wo die Druckluft in Richtung der Längsachse zur Druckseite umgelenkt wird. Die mit hoher Geschwindigkeit einströmende Luft bewirkt auf der Ansaugseite einen Druckabfall, wodurch verhältnismässig grosse Mengen von Umgebungsluft angesaugt werden.

Die Saugöffnung der Ansaugdüse wird vor der Arbeitsphase im Bereich des Arbeitsortes positioniert. Dies kann erreicht werden, indem
- die Ansaugdüse aus einer Ruhe- oder Zwischenposition in den Bereich des Arbeitsortes geführt wird, und/oder
- das Bearbeitungswerkzeug aus einer Ruheposition, welche mit der Arbeitsposition identisch sein kann, zu einer Zwischenposition zur Ausführung einer Aktion, z.B. der Uebernahme eines Drahtrestes, und von dort wieder zurückgeführt wird.

Nach einer besonderen Variante der Erfindung kann bei einer ortsfesten Ansaugdüse ein gasdichter Saugrüssel mit einer endständigen Saugöffnung angebracht sein. Diese kann von einer Ruheposition in eine Arbeitsposition geführt werden, ohne dass die Ansaugdüse oder ein Bearbeitungswerkzeug verschoben wird. Funktionell entspricht die am Saugrüssel angebrachte Saugöffnung den vorstehend beschriebenen Ausführungsformen.

Der Saugrüssel kann als flexibler Schlauch, als flexibler und längenveränderbarer Balg, beide unterdruckfest, oder als teleskopartig ineinander geschobene Rohre ausgebildet sein.

Erfindungsgemäss wird das Verfahren insbesondere zum Entfernen von Drahtresten, Drehspänen oder Dämpfen angewendet. Drahtresten entstehen insbesondere in Wickelautomaten, Drehspäne bei Drehautomaten zum Ueberdrehen des Kollektors eines Kollektorankers und Dämpfe beim Schweissen in Schweissautomaten.

Die Erfindung wird anhand der in der Zeichnung dargestellten Ausführungsbeispiele, welche auch Gegenstand von abhängigen Ansprüchen sind, näher erläutert. Es zeigen schematisch:
- Fig. 1 eine Teilansicht eines Wickelautomaten für die Herstellung von Kollektorankern, mit aufgeschnittener Ansaugdüse,
- Fig. 2 eine teilweise Seitenansicht eines Drehautomaten für Kollektoren, mit aufgeschnittener Ansaugdüse, und
- Fig. 3 eine teilweise Seitenansicht eines Schweissautomaten für Kollektoranker, mit aufgeschnittener Ansaugdüse.

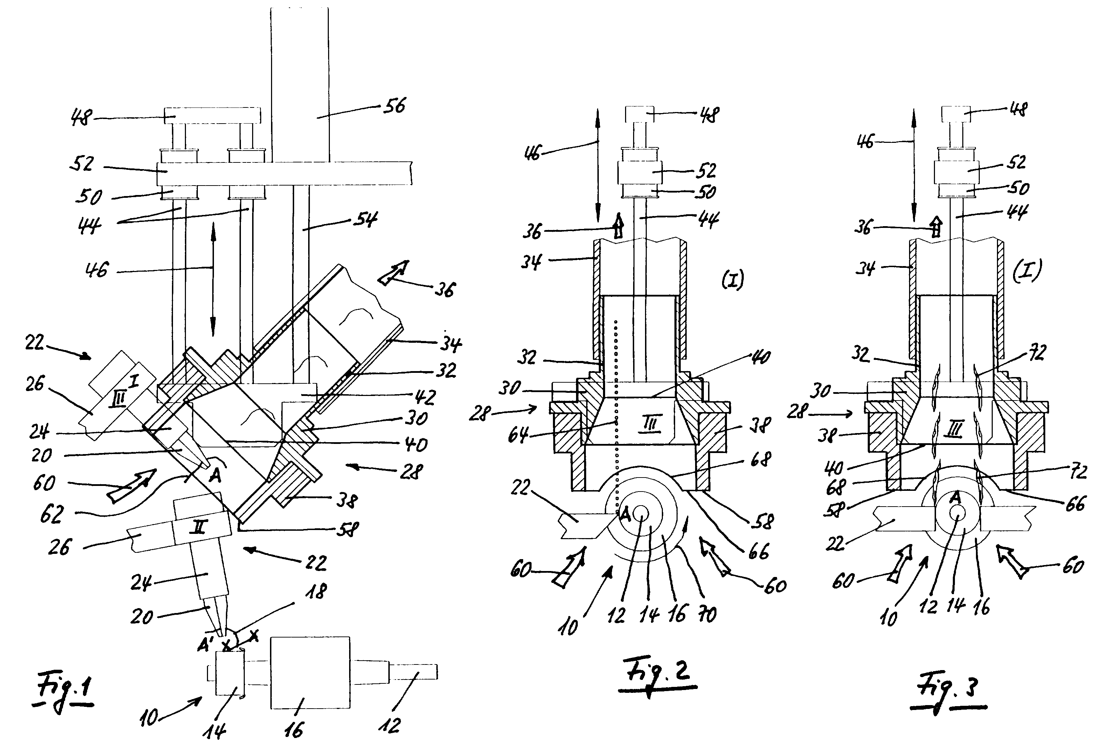

Ein in Fig. 1 in Ansicht dargestellter Kollektoranker 10 umfasst eine Ankerwelle 12, einen Kollektor 14 und ein Blechpaket 16. Ein vom Kollektor 14 abragender Kupferdraht 18 mit einer Lackisolierung wird von einer nicht dargestellten Schneideeinrichtung entlang der Linie x-x durchgetrennt. Vorgängig wird der Kupferdraht vom Drahtklemmer 20 eines Bearbeitungswerkzeugs 22 ergriffen und festgehalten. Der zangenartige Drahtklemmer 20 ist in einem Halter 24 derart gelagert, dass die beiden Klemmerarme in an sich bekannter Weise gegeneinander gedrückt werden können. Der Halter 24 seinerseits kann mit einem über einen ebenfalls an sich bekannten Mechanismus angetriebenen Schwenkarm 26 positioniert werden.

Die in Fig. 1 dargestellte Ansaugdüse 28 ist als nach dem Coanda-Effekt arbeitender Luftmengenverstärker ausgebildet. Aus Gründen der Uebersichtlichkeit nicht dargestellte Druckluft wird seitlich in den ringförmigen Düsenkörper 30 eingeleitet und in Richtung eines Düsenstutzens 32 mit übergestülptem Schlauch oder Rohr 34 in Richtung eines Pfeils 36 abgeleitet.

Ein ansaugseitig auf den Düsenkörper 30 aufgesetzter Adapter 38 ist im wesentlichen ringförmig, mit verstärktem Oberteil, ausgebildet. Der Innendurchmesser des Adapters 38 entspricht dem Durchmesser der Saugöffnung 40 des Düsenkörpers 30.

Der Düsenkörper 30 ist schwenkbar an einem Düsenhalter 42 befestigt. Dieser ist seinerseits an Führungsschienen oder -stangen angelenkt, welche - wie durch den Doppelpfeil 46 angedeutet - oberhalb der gezeichneten Position gehoben und gesenkt werden können. Dabei gleiten die beiden oben über ein Joch 48 verbundenen Führungsschienen oder -stangen 44 durch Führungen 50 einer am nicht dargestellten Maschinenrahmen befestigten Platte 52. Eine Hubeinrichtung 56, welche über eine Hubstange 54 auf den Düsenhalter 42 einwirkt, ist in an sich bekannter Weise als pneumatischer oder hydraulischer Hubzylinder, Schrittmotor oder Linearmotor ausgebildet. Je nach Hubeinrichtung 56 kann die Hubstange 54 auch als Spindel ausgebildet sein.

Das Bearbeitungswerkzeug 22 mit dem Drahtklemmer 20 ist in zwei Positionen gezeichnet:
- In einer oberen Position I durchgreift der Halter 24 für den Drahtklemmer 20 eine in Fig. 1 nicht erkennbare, von der Stirnseite 58 des Adapters 38 ausgehende Aussparung (68 in Fig. 2) in der Seitenwand des Adapters. Dieser ist individuell so ausgebildet, dass der Halter 24 in die Aussparung passt.
   I entspricht der Ruheposition des Bearbeitungswerkzeugs 22.
- Ist ein Kollektor 14 fertig gewickelt, wird die Ansaugdüse 28 gehoben, damit der Schwenkarm 26 das Bearbeitungswerkzeug 22 in die gestrichelt gezeichnete Ruheposition II absenken kann. Der Drahtklemmer 20 erfasst den Kupferdraht 18, welcher unmittelbar nachher abgeschnitten wird.
- Darauf hebt der Schwenkarm 26 das Bearbeitungswerkzeug 22 in die Arbeitsposition III, welche im vorliegenden Fall mit der Ruheposition I geometrisch identisch ist. Die Ansaugdüse wird wieder in die gezeichnete Position abgesenkt.

Falls der Luftmengenverstärker, die Ansaugdüse 28, nicht im Dauerbetrieb läuft, wird diese beispielsweise beim Absenken des Schwenkarms 26 eingeschaltet. Im Innenraum des Adapters 38, insbesondere also am Arbeitsort A, entsteht durch die Injektorwirkung der einströmenden Druckluft ein Unterdruck, was am Arbeitsort A vorbeiströmende, durch einen Pfeil dargestellte Arbeitsluft 60 zur Folge hat. Beim nun erfolgenden Oeffnen des Drahtklemmers 20 wird der nun freie Drahtrest 62 vom Arbeitsluftstrom 60 in Richtung der Saugöffnung 40 mitgerissen und gelangt über den Schlauch 34 in einen nicht dargestellten Behälter oder in eine Reinigungs- und Recyclinganlage. Die Flugbahn des Drahtrestes 62 ist in Fig. 1 durch aufeinanderfolgende Andeutung dieses Stücks dargestellt.

In Fig. 2 und 3 werden soweit möglich dieselben Bezugsziffern wie in Fig. 1 verwendet.

In der Ausführungsform gemäss Fig. 2 ist der Kollektoranker 10 mit seiner Ankerwelle 12 in einen nicht dargestellten Drehautomaten eingespannt. Das Bearbeitungswerkzeug 22 ist ein Drehstahl, mit welchem die zylindermantelförmige Oberfläche des Kollektors 14 nachbearbeitet wird. Der Luftstrom 60 (Fig. 1) reisst die Bearbeitungsrückstände, Metallspäne 64, in Richtung der durch die Stirnseite 58 des Kollektors 38 gebildeten Saugöffnung 66 mit. Die Späne werden analog den Drahtresten 62 gemäss Fig. 1 weiterverarbeitet.

Ausgehend von der Stirnseite 58 des Adapters 38 ist eine Aussparung 68, entsprechend dem in Richtung des Pfeils 70 rotierenden Kollektoranker 10, vorgesehen.

Wird ein neuer Kollektoranker 10 in den Drehautomaten eingesetzt, kann vorerst die Ansaugdüse 28 von der Arbeitsposition III in Richtung des Pfeils 46 in die nicht näher dargestellte Ruheposition I gehoben werden.

Im Unterschied zu Fig. 2 ist in Fig. 3 nicht ein Drehstahl sondern eine Schweisselektrode als Bearbeitungswerkzeug 22 dargestellt. An den Schweissflächen entstehen durch das Abbrennen des isolierenden Lacküberzugs der Kupferdrähte Dämpfe 72, welche vom Unterdruck bzw. von der einströmenden Arbeitsluft 60 mitgerissen werden.

In den Fig. 1 bis 3 wird eindrücklich dargestellt, dass die hier explizit dargestellten Bearbeitungsrückstände in Form von Drahtresten 62, Metallspänen 64 und Dämpfen 72 beim Erzeugen eines wenigstens temporären, lokalen Unterdrucks am Arbeitsort A vom angesaugten Luftstrom 60 mitgerissen und abtransportiert werden.

## Patentansprüche

1. Verfahren zum Entfernen von festen, flüssigen und/oder gasförmigen Bearbeitungsrückständen ( 62, 64, 72 ) bei der Herstellung von Kollektorankern (10),
dadurch gekennzeichnet, dass
die Bearbeitungsrückstände (62,64,72) durch Erzeugung eines wenigstens temporären, lokalen Unterdrucks am Arbeitsort (A) mit dem angesaugten Luftstrom (60) abtransportiert werden.

2. Verfahren nach Anspruch 1, dadurch gekennzeichnet, dass die Bearbeitungsrückstände (62,64,72) über eine in einer Arbeitsphase direkt am Arbeitsort (A) positionierte Saugöffnung (40) einer Ansaugdüse (28) abtransportiert werden.

3. Verfahren nach Anspruch 1 oder 2, dadurch gekennzeichnet, dass zum verbesserten Abtransport der Bearbeitungsrückstände (62,64,72) der Arbeitsort (A) in der Arbeitsphase teilweise von einem vorzugsweise individuell angepassten Adapter (38) mit einer Saugöffnung (66) umschlossen wird.

4. Verfahren nach einem der Ansprüche 2 bis 3, dadurch gekennzeichnet, dass die abtransportierten Bearbeitungsrückstände (62,64,72) einem Behälter oder einer Anlage zum Reinigen und/oder Recyclieren zugeführt werden.

5. Verfahren nach einem der Ansprüche 1 bis 4, dadurch gekennzeichnet, dass der lokale Unterdruck an der Ansaugseite einer als Luftmengenverstärker ausgebildeten Ansaugdüse (28) erzeugt wird.

6. Verfahren nach einem der Ansprüche 1 bis 5, dadurch gekennzeichnet, dass die Saugöffnung (40 oder 66) der Ansaugdüse (28) vor der Arbeitsphase im Bereich des Arbeitsortes (A) positioniert wird.

7. Verfahren nach Anspruch 6, dadurch gekennzeichnet, dass die Ansaugdüse (28) und/oder das Bearbeitungswerkzeug (22) zum Entfernen der Bearbeitungsrückstände (62,64,72) aus einer Ruhe- (I) oder Zwischenposition (II) in eine Arbeitsposition (III) im Bereich des Arbeitsortes (A) geführt wird/werden.

8. Verfahren nach Anspruch 6, dadurch gekennzeichnet, dass eine an einem gasdichten Saugrüssel einer ortsfesten Ansaugdüse (28) ausgebildete Saugöffnung von einer Ruheposition (I) in eine Arbeitsposition (III) gebracht wird.

9. Verfahren nach Anspruch 8, dadurch gekennzeichnet, dass eine an teleskopartig ineinanderschiebbaren Rohren, an einem flexiblen, saugfesten Schlauch oder an einem Balg ausgebildete Saugöffnung in Arbeitsposition (III) gebracht wird.

10. Anwendung des Verfahrens nach einem der Ansprüche 1 bis 9 zum Entfernen von Drahtresten (62) von Wickelautomaten, Drehspänen (64) von Drehautomaten oder Dämpfen (72) von Schweissautomaten.
